# EUROPÄISCHE PATENTSCHRIFT

(11) **EP 2 687 820 B1**
(45) Veröffentlichungstag und Bekanntmachung des Hinweises auf die Patenterteilung: **10.04.2019**
(21) Anmeldenummer: 13172674.7
(22) Anmeldetag: 19.06.2013
(51) Int. Cl.: G01D 5/244, G01D 5/245

(54) **Maßverkörperung, Verfahren zur Herstellung und Verwendung einer Maßverkörperung**
Dimensional scale, method for production and use of a measurement scale
Corps de mesure, son procédé de fabrication et utilisation d'un corps de mesure

(30) Priorität: 19.07.2012 DE 102012212698
(43) Veröffentlichungstag der Anmeldung: 22.01.2014
(73) Patentinhaber: Dr. Johannes Heidenhain GmbH, 83301 Traunreut (DE)
(72) Erfinder: Haible, Pascal, 83308 Trostberg (DE)

(56) Entgegenhaltungen:
- EP-A1- 0 945 729
- EP-A1- 2 019 291
- EP-A2- 2 428 308
- WO-A1-2005/036029
- GB-A- 2 035 872

## Beschreibung

Die Erfindung ein Verfahren zur Herstellung einer Maßverkörperung wie sie insbesondere in Winkelmesssystemen einsetzbar ist gemäß dem Anspruch 1.

Derartige Winkelmesssysteme dienen zur Messung von Drehbewegungen bzw. Drehstellungen eines Maschinenteils, etwa einer Welle, an der dann eine Maßverkörperung, häufig in Form eines ringförmigen Körpers, der eine Winkelskalierung aufweist, drehfest fixiert ist. Die Winkelskalierung kann beispielsweise eine optische oder eine magnetische Teilung aufweisen, die entsprechend abgetastet werden kann. Dabei wird die Drehbewegung entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in Werkzeugmaschinen an schnell laufenden Spindeln verwendet. Derartige Spindeln werden immer mehr mit hohen Drehzahlen beispielsweise bis zu über 40000 Umdrehungen pro Minute betrieben, um hochwertige Werkstückoberflächen z. B. durch spanabhebende Werkzeugmaschinen zu erreichen. Entsprechend groß ist die mechanische Belastung von rotierenden Teilen, die an einer derartigen Spindel montiert sind. Insbesondere sind die in der Regel ringförmigen Maßverkörperungen, insbesondere mit einer magnetischen Teilung, drehfest mit den Spindeln verbunden, so dass diese enormen Zentrifugalkräften ausgesetzt sind. Es ist ein permanentes Ziel Maßverkörperungen zu konstruieren, welche den Belastungen auf Grund hoher Drehzahlen standhalten, und welche insbesondere unter diesen Belastungen die erforderliche Dauerfestigkeit aufweisen. Diese Anforderungen resultieren nicht zuletzt aus sicherheitstechnischen Überlegungen.

Die Erfindung geht von einem Stand der Technik aus, wie er beispielsweise in der Patentschrift EP 2019291 A1 offenbart ist. Dort ist eine zweiteilige Maßverkörperung gezeigt, wobei die betreffenden Bauteile durch eine Lötverbindung gefügt sind.

Der Erfindung liegt die Aufgabe zu Grunde, ein Verfahren zur Herstellung einer Maßverkörperung zur Messung der Drehstellung eines Maschinenteils zu schaffen. Die so hergestellte Maßverkörperung zeichnet sich insbesondere dadurch aus, dass diese für extrem hohe maximale Drehzahlen geeignet ist und wirtschaftlich herstellbar ist.

Diese Aufgaben werden durch ein Verfahren zur Herstellung einer Maßverkörperung gemäß dem Anspruch 1 gelöst.

Es wird ein Verfahren zur Herstellung einer Maßverkörperung zur Messung der Drehstellung eines Maschinenteils um eine Achse mit folgenden Schritten angegeben:
Bereitstellen eines ersten Bauteils und eines zweiten Bauteils, wobei das zweite Bauteil aus einem hartmagnetischen Material hergestellt ist, Verschweißen der Bauteile durch ein Elektronenstrahlschweißverfahren, nachfolgendes Aufbringen einer Winkelskalierung auf das zweite Bauteil. Weiterhin wird die Winkelskalierung durch einen Magnetisierungsprozess aufgebracht, so dass die Winkelskalierung danach aus unterschiedlich magnetisierten Bereichen besteht. Mit Vorteil wird durch das Elektronenstrahlschweißverfahren ein Elektronenstrahl erzeugt, der mit axialer Richtungskomponente (bezogen auf die Achse, um welche die Drehstellung gemessen werden wird) orientiert ist, wobei die Schweißnaht, welche durch das Elektronenstrahlschweißverfahren hergestellt wird, entlang einer umlaufenden Linie verläuft. Das Attribut umlaufend bezieht sich insbesondere auf die Achse.

In weiterer Ausgestaltung des Verfahrens zur Herstellung einer Maßverkörperung wird das Elektronenstrahlschweißverfahren so durchgeführt, dass an der Fügelinie zwischen dem ersten Bauteil und dem zweiten Bauteil eine Schweißnaht hergestellt wird, die eine axiale Tiefe von mindestens 50% der axialen Ausdehnung der Maßverkörperung aufweist.

Demnach ist die Maßverkörperung zur Messung der Drehstellung eines Maschinenteils um eine Achse geeignet. Die Maßverkörperung umfasst ein erstes Bauteil und ein zweites Bauteil, wobei das zweite Bauteil eine Winkelskalierung aufweist. Die Bauteile sind durch ein Elektronenstrahlschweißverfahren miteinander verschweißt.

Mit Vorteil sind das erste und / oder das zweite Bauteile monolithisch ausgeführt. Unter dem Begriff monolithisch ist im Folgenden zu verstehen, dass ein so bezeichnetes Bauteil aus einem Stück besteht, so dass dieser etwa durch einen spanabhebenden Prozess gefertigt werden kann. Durch die monolithische Bauweise kann die zulässige maximale Drehzahl positiv beeinflusst werden.

Insbesondere kann die Maßverkörperung so ausgestaltet sein, dass das zweite Bauteil als ein Ring ausgebildet ist und die Winkelskalierung an der Mantelseite des Rings angeordnet ist. Als Ring ist im Folgenden ein geschlossener hohlzylindrischer Körper zu verstehen oder ein Segment davon, welches nicht über 360° geschlossen ist.

In weiterer Ausgestaltung der Erfindung ist das erste Bauteil ring- oder scheibenförmig ausgestaltet. Dabei ist dann die radial außen liegende Mantelseite des ersten Bauteils mit der Innenseite des als ein Ring ausgebildeten zweiten Bauteils mit Hilfe des Elektronenstrahlschweißverfahrens verschweißt.

Mit Vorteil verläuft die durch das Elektronenstrahlschweißverfahren hergestellte Schweißnaht entlang einer umlaufenden Linie. Insbesondere kann die Schweißnaht als eine Axialnaht ausgeführt sein, die als Stumpfnaht ausgebildet ist.

Der Begriff axial bezieht sich auf die Orientierung der Achse, um welche sich im Betrieb das Maschinenteil, dessen Drehstellung gemessen werden soll, dreht.

In weiterer Ausgestaltung der Erfindung beträgt an der Fügelinie zwischen dem ersten Bauteil und dem zweiten Bauteil die axiale Tiefe der durch das Elektronenstrahlschweißverfahren hergestellten Schweißnaht mindestens 50% der axialen Ausdehnung der Maßverkörperung. Als axiale Tiefe der Schweißnaht kann die Ausdehnung der Schweißnaht in Axialrichtung gesehen werden, wobei zur Herstellung der Schweißnaht der Elektronenstrahl in axialer Richtung ausgerichtet ist. Mit Vorteil kann die axiale Tiefe der Schweißnaht mindestens 75% oder mindestens 85% der axialen Ausdehnung der Maßverkörperung an der Fügelinie betragen. Insbesondere kann die axiale Tiefe der Schweißnaht 100% der axialen Ausdehnung der Maßverkörperung an der Fügelinie betragen, so dass sich also die Schweißnaht in Axialrichtung über die volle axiale Ausdehnung der Maßverkörperung erstreckt.

Weiterhin kann die axiale Tiefe der Schweißnaht mindestens 50% mit Vorteil mindestens 75%, oder mindestens 85% der axialen Ausdehnung des zweiten Bauteils, welches insbesondere als Ring ausgestaltet ist, betragen. Die für diese Betrachtung maßgebliche axiale Ausdehnung des zweiten Bauteils bezieht sich auf den Bereich der Fügelinie oder auf denjenigen Bereich des Bauteils, der an die Schweißnaht angrenzt.

Die Erfindung ist besonders vorteilhaft, wenn das als Ring ausgebildete zweite Bauteil eine geringe Wandstärke aufweist. Insbesondere kann das zweite Bauteil eine radiale Wandstärke die weniger als 8 mm, mit Vorteil weniger als 5 mm oder weniger als 3 mm beträgt, aufweisen. Diese Betrachtung gilt für die fertiggestellte Maßverkörperung insbesondere nach dem Elektronenstrahlschweißen.

Vorzugsweise sind das erste und das zweite Bauteil aus einem metallischen Werkstoff gefertigt. Mit Vorteil ist das zweite Bauteil aus einem ferromagnetischen Material, insbesondere aus einem hartmagnetischen Material, hergestellt. Insbesondere kann das erste Bauteil aus Titan hergestellt sein oder aus Lagerstahl, wie er üblicherweise für die Fabrikation von Wälzlagerringen verwendet wird.

Zudem kann die Winkelskalierung aus unterschiedlich magnetisierten Bereichen bestehen. Ein Aufbringen einer Winkelskalierung auf den zweiten Ring kann aber auch beispielsweise mit einem Laser-Ablations-Prozess vorgenommen werden. Zu diesem Zweck wird die äußere Mantelseite des zweiten Bauteils mit einer speziellen Lage beschichtet und dann eine Einzelstrichablation vorgenommen. Demgemäß kann die Winkelskalierung dann mit einem optischen Prinzip abgetastet werden. Auch kann durch ein Lithographieverfahren oder ein Prägeverfahren eine Winkelskalierung auf dem zweiten Ring aufgebracht werden.

Zudem wird die Verwendung einer entsprechend ausgestalteten Maßverkörperung an einer schnell laufenden Welle einer Werkzeugmaschine zur Messung der Drehstellung der Welle vorgeschlagen. Unter einer schnell laufenden Welle sind Wellen zu verstehen, die sich mit mindestens 10000, insbesondere mindestens 20000, oder mindestens 30000 Umdrehungen pro Minute im Betrieb drehen können. Insbesondere ist es in diesem Zusammenhang vorteilhaft, wenn die Werkzeugmaschine eine spanabhebende Maschine ist, weil derartige Werkzeugmaschinen häufig extrem hohe maximale Drehzahlen der Spindel vorweisen. Entsprechend ist mit Vorteil die Welle, an welcher die Maßverkörperung befestigt ist, an ein spanabhebendes Werkzeug koppelbar.

Vorteilhafte Ausführungsformen des Verfahrens sind aus den Merkmalen des Anspruches 1 und aus den abhängigen Ansprüchen zu entnehmen.

Weitere Vorteile, sowie Einzelheiten der Erfindung ergeben sich aus der nachfolgenden Beschreibung eines Ausführungsbeispiels anhand der beiliegenden Figuren.

Es zeigen die
- Figur 1a: eine Schnittdarstellung der Maßverkörperung mit einer Winkelskalierung,
- Figur 1b: eine Draufsicht auf die Maßverkörperung,
- Figur 2: eine Darstellung der Winkelskalierung, .
- Figur 3: eine Schnittdarstellung durch die Bauteile der Maßverkörperung mit einer Schweißnaht.

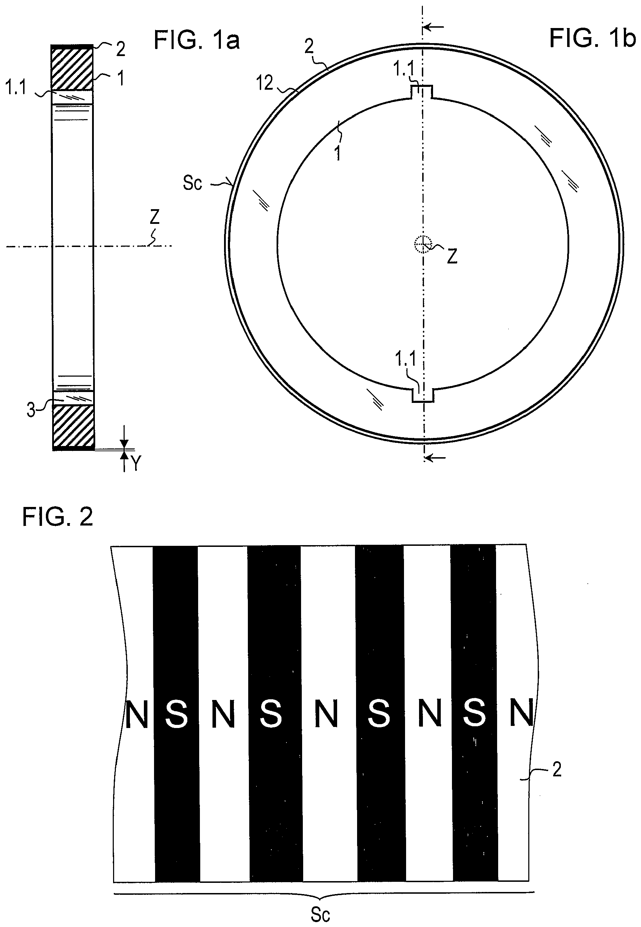

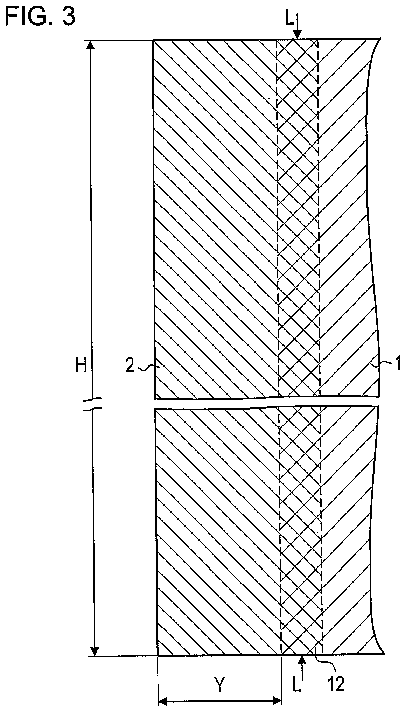

Gemäß den Figuren 1a, 1b und 3 besteht die Maßverkörperung aus einem ersten Bauteil 1 und einem zweiten Bauteil 2. Im gezeigten Ausführungsbeispiel ist das erste Bauteil 1 als ein monolithischer Ring ausgebildet. Es dient als Trägerstruktur und weist an seinem Innenumfang zwei Ausnehmungen zur formschlüssigen drehfesten Befestigung an einem Maschinenteil, hier an einer Welle auf. Insbesondere sind hier diese Ausnehmungen als Passfedernuten 1.1 ausgestaltet, in die eine Passfeder eingebaut werden kann. Das erste Bauteil 1 ist aus einem hochfesten Lagerstahl hergestellt. Alternativ kann zur Erhöhung der zulässigen Drehzahl der Maßverkörperung das erste Bauteil 1 aus Titan gefertigt werden.

Die radial außen liegende Mantelseite des ersten Bauteils 1 wird mit Hilfe eines Dreharbeitsganges genau bearbeitet.

Im Zuge der Herstellung des zweiten Bauteils 2 wird zunächst ein Streifen aus ferromagnetischem Material, der hier eine Stärke von etwa 1,5 mm und eine Höhe von 17 mm aufweist, bereitgestellt. Als ferromagnetisches Material wird hier beispielsweise eine Legierung mit den Komponenten Eisen, Chrom, Kobalt und Molybdän verwendet. Dieser Streifen wird dann zu einem Ring über 360° gebogen und die Stoßlinie wird konventionell verschweißt. Somit ist hier das zweite Bauteil 2 wie auch das erste Bauteil 1 als ein geschlossener monolithischer Ring ausgebildet.

Als nächstes wird das zweite Bauteil 2 bzw. der zweite Ring einer Temperaturbehandlung unterzogen in der Weise, dass ein Glühprozess vorgenommen wird. Dadurch werden die erforderlichen magnetischen Eigenschaften eingestellt.

Danach wird die Innenseite des zweiten Bauteils 2 beispielsweise durch einen Drehprozess bearbeitet, um die vorgegebene Toleranz zu erreichen. Hier ist üblicherweise nur ein vergleichsweise geringer Materialabtrag notwendig. Alternativ kann auch eine nicht spanabhebende Verformung vorgenommen werden.

Im Anschluss daran werden das erste Bauteil 1 und das zweite Bauteil 2 zusammengefügt. In diesem Zusammenhang wird zunächst das erste Bauteil 1 in das zweite Bauteil 2 eingeführt, so dass die radial außen liegende Mantelseite des ersten Bauteils 1 die Innenseite des zweiten Bauteils 2 berührt oder gegenüber liegt. Da die Oberflächen der Mantelseite und der Innenseite präzise hergestellt sind, befindet sich kein Luftspalt oder nur ein vergleichsweise kleiner Luftspalt zwischen dem ersten Bauteil 1 und dem zweiten Bauteil 2. Somit ist eine umlaufende Fügelinie gegeben, an der sich die Oberflächen der Mantelseite und der Innenseite gegenüber liegen.

Die beiden derart angeordneten Bauteile 1, 2 werden in eine Vakuumkammer einer Elektronenstrahlschweißanlage gebracht. Dort wird ein fokussierter Elektronenstrahl mit einer Ausrichtung parallel zur Achse Z auf die Fuge zwischen dem ersten Bauteil 1 und dem zweiten Bauteil 2 gerichtet, so dass die Materialen im Fügebereich aufschmelzen. Es wird somit eine Schweißnaht 12, hier eine Axialschweißnaht, hergestellt, die gemäß der Figur 1b entlang einer umlaufenden Linie verläuft. Der Elektronenstrahlschweißprozess wird so durchgeführt, dass die Tiefe L der Schweißnaht 12 so groß ist, dass die Schweißnaht 12 die herzustellende Maßverkörperung entlang der Fügelinie in Axialrichtung, also in Richtung parallel zur Achse Z, vollständig durchdringt. Dies wird insbesondere dadurch erreicht, dass die Beschleunigungsspannung, welche die Strahlelektronen in der Elektronenstrahlanlage beschleunigt, entsprechend hoch eingestellt wird.

Nach dem Schweißen wird die Mantelseite des als Ring ausgebildeten zweiten Bauteils 2 bearbeitet, insbesondere poliert oder geschliffen, um eine hochwertige Oberfläche zu erhalten. Weiterhin werden die Stirnseiten bearbeitet, so dass axiale Überstände im Bereich der Schweißnaht 12 entfernt werden.

Danach wird die herzustellende Maßverkörperung auf eine Teilungsmaschine gespannt, welche eine Referenzwinkelmesseinrichtung aufweist. Mit Hilfe eines Magnetisierungskopfes wird dann an der Mantelseite eine Winkelskalierung Sc in Form von magnetischen Nord- und Südpolen in einem Polabstand von beispielsweise 200 µm aufgebracht (siehe Figur 2).

Die Figur 3 zeigt die Maßverkörperung im Bereich der Fügelinie bzw. der Schweißnaht 12. Die axiale Ausdehnung H des zweiten Bauteils 2 bzw. des zweiten Rings beträgt nach der Bearbeitung 15 mm. Ebenfalls 15 mm beträgt gemäß der Figur 3 die axiale Tiefe L der Schweißnaht 12. Mit anderen Worten ausgedrückt, beträgt also die axiale Tiefe L der Schweißnaht 12 100% der axialen Ausdehnung H der Maßverkörperung an der Fügelinie (L/H = 100%).

Dagegen beträgt die radiale Wandstärke Y des zweiten Bauteils 2 nach dem Elektronenstrahlschweißprozess 1,3 mm. Wie aus der Figur 3 ersichtlich, ist die Wandstärke Y das Maß in Radialrichtung zwischen der Mantelseite und dem Beginn der Schweißnaht 12.

Zur Messung der Drehstellung einer Welle um eine Achse Z, kann die mantelseitige Winkelskalierung Sc des zweiten Bauteils 2 durch einen magnetosensitiven Abtastkopf abgetastet werden.

## Patentansprüche

1. Verfahren zur Herstellung einer Maßverkörperung zur Messung der Drehstellung eines Maschinenteils um eine Achse (Z) mit folgenden Schritten:
- Bereitstellen eines ersten Bauteils (1) und eines zweiten Bauteils (2), wobei das zweite Bauteil (2) aus einem hartmagnetischen Material hergestellt ist,
- Durchführung einer Temperaturbehandlung in der Weise, dass das zweite Bauteil (2) einem Glühprozess unterzogen wird und nachfolgendes,
- Verschweißen der Bauteile (1; 2) durch ein Elektronenstrahlschweißverfahren,
- nachfolgendes Aufbringen einer Winkelskalierung (Sc) auf das zweite Bauteil (2), wobei die Winkelskalierung (Sc) durch einen Magnetisierungsprozess aufgebracht wird, so dass die Winkelskalierung (Sc) danach aus unterschiedlich magnetisierten Bereichen besteht.

2. Verfahren zur Herstellung einer Maßverkörperung gemäß dem Anspruch 1, wobei beim Verschweißen der Bauteile (1; 2) durch ein Elektronenstrahlschweißverfahren ein Elektronenstrahl erzeugt wird, der mit axialer Richtungskomponente orientiert ist, wobei die Schweißnaht (12), welche durch das Elektronenstrahlschweißverfahren hergestellt wird, entlang einer umlaufenden Linie verläuft.

3. Verfahren zur Herstellung einer Maßverkörperung gemäß dem Anspruch 1 oder 2, wobei das Elektronenstrahlschweißverfahren so durchgeführt wird, dass an der Fügelinie eine Schweißnaht (12) hergestellt wird, die eine axiale Tiefe (L) von mindestens 50% der axialen Ausdehnung (H) der Maßverkörperung aufweist.

4. Verfahren gemäß einem der vorhergehenden Ansprüche, wobei das zweite Bauteil (2) als ein Ring ausgebildet ist und die Winkelskalierung (Sc) an der Mantelseite des Rings aufgebracht wird.

5. Verfahren gemäß einem der vorhergehenden Ansprüche, wobei das erste Bauteil (1) ring- oder scheibenförmig ausgestaltet ist und dessen radial außen liegende Mantelseite mit der Innenseite des als ein Ring ausgebildeten zweiten Bauteils (2) verschweißt wird.

6. Verfahren gemäß einem der vorhergehenden Ansprüche, wobei das als Ring ausgebildete zweite Bauteil (2) eine radiale Wandstärke (Y) aufweist, die weniger als 8 mm beträgt.

7. Verfahren gemäß einem der vorhergehenden Ansprüche, wobei das erste Bauteil (1) aus Titan hergestellt ist.

## Claims

1. Method for producing a dimensional scale for measuring the rotational position of a machine part about an axis (Z), comprising the following steps:
- providing a first component (1) and a second component (2), wherein the second component (2) is produced from a hard magnetic material,
- carrying out a temperature treatment in such a way that the second component (2) is subjected to an annealing process and the following,
- welding the components (1; 2) by means of an electron beam welding method,
- subsequently applying an angle scale (Sc) to the second component (2), wherein the angle scale (Sc) is applied by a magnetization process, so that the angle scale (Sc) thereafter consists of differently magnetized regions.

2. Method for producing a dimensional scale according to Claim 1, wherein, during the welding of the components (1; 2) by means of an electron beam welding method, an electron beam which is oriented with an axial directional component is produced, wherein the weld (12) which is produced by the electron beam welding method extends along a circumferential line.

3. Method for producing a dimensional scale according to Claim 1 or 2, wherein the electron beam welding method is carried out in such a way that, at the joint line, a weld (12) is produced which has an axial depth (L) of at least 50% of the axial extent (H) of the dimensional scale.

4. Method according to one of the preceding claims, wherein the second component (2) is formed as a ring and the angle scale (Sc) is applied to the shell side of the ring.

5. Method according to one of the preceding claims, wherein the first component (1) is configured in the form of a ring or disc and its radially outer shell side is welded to the inner side of the second component (2) formed as a ring.

6. Method according to one of the preceding claims, wherein the second component (2) formed as a ring has a radial wall thickness (Y) which is less than 8 mm.

7. Method according to one of the preceding claims, wherein the first component (1) is produced from titanium.

## Revendications

1. Procédé de fabrication d'un corps de mesure pour mesurer la position de rotation d'une partie de machine autour d'un axe (Z), qui comprend les étapes suivantes :
- fournir un premier composant (1) et un second composant (2), le second composant (2) étant constitué d'un matériau magnétique dur,
- effectuer un traitement thermique de telle sorte que le second composant (2) soit soumis à un processus de recuit, puis
- souder les composants (1 ; 2) par un procédé de soudage par faisceau d'électrons,
- puis appliquer une échelle angulaire (Sc) sur le second composant (2), l'échelle angulaire (Sc) étant appliquée par un processus de magnétisation de façon à ce que l'échelle angulaire (Sc) soit ensuite constituée de régions magnétisées de manière différente.

2. Procédé de fabrication d'un étalon de mesure selon la revendication 1, dans lequel un faisceau d'électrons, qui est orienté de manière à présenter une composante de direction axiale, est généré lors du soudage des composants (1 ; 2) par un procédé de soudage par faisceau d'électrons, le cordon de soudure (12) produit par le procédé de soudage par faisceau d'électrons s'étendant le long d'une ligne circonférentielle.

3. Procédé de fabrication d'un corps de mesure selon la revendication 1 ou 2, dans lequel le procédé de soudage par faisceau d'électrons est mis en oeuvre de manière à produire sur le trajet de vol un cordon de soudure (12) qui présente une profondeur axiale (L) égale à au moins 50% de l'extension axiale (H) du corps de mesure.

4. Procédé selon l'une des revendications précédentes, dans lequel le second composant (2) est réalisé sous la forme d'un anneau et l'échelle angulaire (Sc) est appliquée du côté de l'enveloppe de l'anneau.

5. Procédé selon l'une des revendications précédentes, dans lequel le premier composant (1) est réalisé en forme d'anneau ou de disque et son côté radialement extérieur de l'enveloppe est soudé à la face interne du second composant (2) réalisé en forme d'anneau.

6. Procédé selon l'une des revendications précédentes, dans lequel le second élément (2) réalisé en forme d'anneau présente une épaisseur de paroi radiale (Y) qui est inférieure à 8 mm.

7. Procédé selon l'une des revendications précédentes, dans lequel le premier composant (1) est constitué de titane.
